# EUROPEAN PATENT APPLICATION

(11) **EP 4 670 964 A1**
(43) Date of publication of application: **31.12.2025**
(21) Application number: 25183238.2
(22) Date of filing: 17.06.2025
(51) Int. Cl.: B32B 7/12, B32B 21/00, B32B 21/08, B32B 21/14

(54) **MULTI-LAYER SLAB COMPRISING WOOD AND BIODEGRADABILE AND BIO-BASED PLASTIC**

(30) Priority: 24.06.2024 IT 202400014443
(71) Applicant: Consiglio Nazionale Delle Ricerche, 00185 Roma (IT)
(72) Inventor: NEGRI, Martino, 38098 SAN MICHELE ALL'ADIGE (TN) (IT); BONTADI, Jarno, 38098 SAN MICHELE ALL'ADIGE (TN) (IT); CETERA, Paola, 38098 SAN MICHELE ALL'ADIGE (TN) (IT); FELLIN, Marco, 38098 SAN MICHELE ALL'ADIGE (TN) (IT); MARRA, Mario, 38098 SAN MICHELE ALL'ADIGE (TN) (IT); MIGLIETTA, Francesco, 38098 SAN MICHELE ALL'ADIGE (TN) (IT)
(74) Representative: de Alteriis, Renato

(57) **Abstract**

A multilayer slab (1, 1a, 1b, 1c) comprising at least two wood layers (2a, 2b, 2c) and at least one plastic layer (3a, 3b),
wherein said at least one plastic layer (3a, 3b) secures the wood layers (2a, 2b, 2c) to one another;
and wherein said at least one plastic layer (3a, 3b) is made of a biodegradable and bio-based plastic, i.e., of a biodegradable bioplastic; in particular wherein said plastic is bio-based according to ISO 16620-2:2019; in particular wherein said plastic is biodegradable according to EN 14995:2006.

## Description

### Field of the invention

The present invention relates to the field of wood semi-finished products, in particular thin wood semi-finished products.

### Background art

Plastic derived from fossil fuels is still widely used today in various fields of the art.

For example, plastic derived from fossil sources is widely used to make thin products in the packaging sector and to make cards or tags such as credit cards or building access tags.

It would be advantageous to be able to use wood-based materials to make thin products that are currently made with fossil-based plastic. However, it is not trivial to be able to produce thin products using wood-based materials, especially for obtaining products with good mechanical properties, which are also biodegradable and are obtained with a low environmental impact.

Therefore, the need is felt to overcome the limits of the prior art.

Document WO96/23276A1 discloses a card made with layers of wood secured to one another by a biodegradable adhesive, without providing any further information on such an adhesive, and in particular not specifying the type of adhesive or the nature of such an adhesive.

Document US2016/082700A1 discloses a self-adhesive material for making a wooden board. This document describes that the self-adhesive material is a polyolefin film that can be made with material of petrochemical and renewable origin. This document does not describe the fact that the polyolefin is biodegradable.

Document US2015/086747A1 describes wooden boards for use in building, which can withstand extreme climate conditions, e.g., able to withstand a hurricane. The wooden boards are made of plywood comprising a plurality of polymer films. This document teaches the use of polymer films in combination with adhesives such as MDI polymer adhesives or vinyl acetate emulsions with polyurethane or VA-E/PUD dispersions. Substantially, this document teaches how to make wooden boards according to the table in Figure 11. This document is not focused on environmental impact.

Document US2022/212442A1 describes a plywood in which wood is impregnated with polymer.

### Summary of the invention

An object of the present invention is to provide a semi-finished product, in particular a sheet, comprising or made of wood and plastic, which has good mechanical properties, is biodegradable and can be obtained with a low environmental impact.

In particular, an object of the invention is to provide a sheet for the production of thin products, in particular adapted to be used in the packaging sector and for the production of cards or tags.

The present invention achieves at least one of these objects, and other objects which will be apparent in light of the present description, by means of a multilayer slab, according to claim 1, comprising at least two wood layers and at least one plastic layer;
wherein said at least one plastic layer secures, in particular adheres, the wood layers to one another;
and wherein said at least one plastic layer is made of a biodegradable and bio-based plastic, i.e., of a biodegradable bioplastic; in particular wherein said plastic is bio-based according to ISO 16620-2:2019; in particular wherein said plastic is biodegradable according to EN 14995:2006.

Advantageously, a multilayer slab according to the invention and a product obtained from said slab are particularly biodegradable.
The inventors have noted a synergistic effect that allows for better biodegradation given by the combination of layers of wood and biodegradable and bio-based plastic (i.e., biodegradable bioplastic). In particular, the presence of wood can promote the biodegradation process of biodegradable and bio-based plastics.

The multilayer slab is, in particular, a semi-finished product.

The multilayer slab is, in particular, a ligno-composite, in particular comprising or consisting of layers, in particular thin sheets, of wood and at least one biodegradable and bio-based plastic matrix.

Advantageously, a slab according to the invention is ecological, biodegradable, with excellent workability, flexible, and has good mechanical resistance.

Advantageously, a slab according to the invention can be used as a material to replace other materials of petrochemical origin.

Advantageously, the slab according to the invention has a low environmental footprint, easy biodegradability and good technical performance to be used in various industrial contexts, such as for example packaging including food packaging.

Advantageously, a slab according to the invention can also be used as a base material in the craft sector, for example for the production of cards, greeting cards, decorations and lampshades. A slab according to the invention can also be used for making products that are now made of plastic derived from crude oil or in any case not biodegradable. For example, a slab according to the invention can be used to make credit cards, building access tags and other products with magnetic strips, NFC, RFID, QR codes and other similar technologies.

The invention also relates to a process, according to claim 13, for obtaining a multilayer slab comprising the steps of:
a) making a *sandwich* structure comprising at least one biodegradable and bio-based plastic layer arranged between two wood layers, in which each wood layer is formed by at least one wood sheet and preferably in which each plastic layer is formed by at least one plastic sheet;;
b) pressing the sandwich structure by means of a press, in particular wherein the pressing is performed at a temperature greater than 100°C;
   preferably wherein, to make the sandwich structure, the following steps are provided:
   a1) arranging at least one wood sheet on a flat support to make a wood layer;
   a2) arranging at least one plastic sheet on the wood layer made in the previous step to make a plastic layer;
   a3) arranging at least one wood sheet on the plastic layer made in the previous step to make another wood layer;
   a4) optionally repeating steps a2) and a3) to make a sandwich structure having a predetermined number of wood layers and a predetermined number of plastic layers.

In particular, the pressing temperature is selected so that the molten plastic can make the wood layers adhere to one another.

Advantageously, it is a wood/wood adhesion process through a biodegradable bioplastic which acts as an adhesive.

The invention also relates to a card, or tag, according to claim 15.

"Bio-based" plastic or "bioplastic" means plastic made with materials, in particular raw materials, that are biological and/or organic and/or plant-based materials and/or coming from biodegradation. In particular, the plastic is bio-based according to ISO 16620-2:2019. "Biodegradable plastic" means plastic able to complete a biodegradation process, in particular according to EN 14995:2006.

Further features and advantages of the invention will become more apparent in light of the detailed description of exemplary but non-exclusive embodiments.

The dependent claims describe particular embodiments of the invention.

### Brief description of the drawings

The description of the invention refers to the accompanying drawings, which are provided by way of non-limiting example, in which:
Figure 1 diagrammatically shows a perspective view of a multilayer slab according to the invention;
Figure 2 diagrammatically shows a layering of an example of multilayer slab according to the invention;
Figure 3 diagrammatically shows a layering of another example of multilayer slab according to the invention;
Figure 4 diagrammatically shows a layering of another example of multilayer slab according to the invention;
Figure 5 diagrammatically shows a layering of another example of multilayer slab according to the invention;
Figure 6 diagrammatically shows a perspective view of a step of an edge jointing and thickness planing process for a wooden board from which wood sheets can be obtained;
Figure 7 diagrammatically shows a perspective view of a cutting step of a wooden board for obtaining wood sheets;
Figure 8 diagrammatically shows an exploded perspective view of a sandwich structure made for then obtaining a multilayer slab according to the invention;
Figure 9 diagrammatically shows a perspective view of a hot pressing step of the sandwich structure in Figure 8;
Figure 10 diagrammatically shows a perspective view of a cold pressing step, subsequent to the hot pressing;
Figure 11 diagrammatically shows a plan view of a card obtained from a multilayer slab according to the invention.

The same elements or components have the same reference numerals.

### Description of exemplary embodiments of the invention

With reference to the Figures, exemplary embodiments of a multilayer slab 1, 1a, 1b, 1c according to the invention and of a process for obtaining the multilayer slab 1, 1a, 1b, 1c are described.

In all the embodiments, the multilayer slab 1, 1a, 1b, 1c, in particular for making a card or a packaging, comprises at least two wood layers 2a, 2b, 2c and at least one plastic layer 3a, 3b;
wherein said at least one plastic layer 3a, 3b secures, in particular adheres, the wood layers 2a, 2b, 2c to one another;
and said at least one plastic layer 3a, 3b is made of (i.e., consists of) a biodegradable and bio-based plastic, i.e., it is made of a biodegradable bioplastic.

In particular, the plastic is bio-based according to ISO 16620-2:2019 (Plastics Biobased content Part 2: Determination of biobased carbon content).

In particular, the plastic is biodegradable according to EN 14995:2006.

In particular, the wood layers 2a, 2b, 2c are secured to one another only by said biodegradable and bio-based plastic and more in particular other adhesives are absent, i.e., the multilayer slab has not other adhesives.

In particular, the wood layers 2a, 2b, 2c which are subsequent to one another (along the thickness of the multi-layer slab), in particular immediately subsequent to one another, are secured to one another by a single respective layer of said biodegradable and bio-based plastic.

Preferably, said at least two wood layers 2a, 2b, 2c and said at least one plastic layer 3a, 3b are alternated with one other so that each plastic layer 3a, 3b is arranged between two respective wood layers 2a, 2b, 2c.

Preferably, each wood layer 2a, 2b, 2c has a thickness from 30 to 900 µm (micrometers), preferably from 30 to 500 µm, preferably from 30 to 300 µm.

It is preferable that the thickness of each wood layer 2a, 2b, 2c is not less than 30 µm because otherwise the wood layer would be too difficult to obtain and handle and would also not have suitable mechanical characteristics.

It is preferable that the thickness of each wood layer 2a, 2b, 2c is not greater than 900 µm because the rigidity would be so extreme to compromise its use for the assumed purposes.

It is particularly preferable that the thickness of each wood layer 2a, 2b, 2c is not greater than 300 µm because the rigidity would be increased above a threshold of usability for the hypothesized purposes.

Each wood layer 2a, 2b, 2c, in particular, consists of wood.

Each wood layer 2a, 2b, 2c can be formed by a wood sheet 21 or by a plurality of wood sheets 21 adjacent to one other on the same plane, i.e., on the same surface.

Each wood sheet, in particular, is a sheet of ultra-thin wood.

Preferably, each plastic layer 3a, 3b has a thickness from 20 to 90 µm.

It is preferable that the thickness of each plastic layer 3a, 3b is not less than 20 µm to maintain a certain cohesion and strength of each layer.

It is preferable that the thickness of each plastic layer 3a, 3b is not greater than 90 µm to limit the proportion of plastic in favor of the quantity of wood on the finished product and at the same time ensure the gluing between two wood sheets 21.

The width of the wood sheets 21 is preferably comprised between 60 and 200 mm, in order to make assembly operations easier.

The length of the wood sheets 21 is preferably comprised between 400 and 1200 mm, and in particular it is preferably equal to the length of the wooden board 9 from which the wood sheets 21 are obtained.

Advantageously, each plastic layer 3a, 3b can be formed by one plastic sheet or by a plurality of plastic sheets adjacent to one other on the same plane, i.e., on the same surface. The use of one or more plastic sheets is particularly preferable and advantageous, in particular because it simplifies the production process.

It is particularly preferable that each plastic layer 3a, 3b is formed by a plastic sheet, in order to simplify the process of making the multilayer slab and so as to have better mechanical characteristics.

Preferably, each plastic layer 3a, 3b, in particular each plastic sheet, is in contact with at least one wood layer 2a, 2b, 2c; preferably with two respective wood layers 2a, 2b, 2c.

The plastic, in particular, is a thermoplastic.

Preferably, the plastic that each plastic layer 3a, 3b is made of, in particular each plastic sheet, is PLA (polylactic acid) or a plastic obtained from organic or plant-based material; preferably obtained from corn starch; preferably the plastic is PLA or Mater-Bi^{®}.

It is particularly preferable that said plastic that each plastic layer 3a, 3b is made of, in particular each plastic sheet, comprises polybutylene adipate terephthalate (PBAT) and/or thermoplastic starch (TPS); the plastic being in particular obtained from organic or plant-based material, in particular from corn starch; the plastic being in particular Mater-Bi^{®}.

Plastics comprising PBAT and/or TPS (in particular Mater-Bi comprising PBAT and/or TPS) are particularly preferable with respect to plastics comprising PLA for various reasons, and in particular: they are compostable even at home (while PLA is only compostable at industrial level), and are therefore more environmentally sustainable; they allow for easier supply of raw materials, as they are more widely marketed films than PLA; the slab and the card obtained from the slab are more flexible.

In particular, in case the plastic comprises polybutylene adipate terephthalate (PBAT) and/or thermoplastic starch (TPS), the plastic does not comprise PLA.

Preferably, the multilayer slab 1, 1a, 1b, 1c has a thickness, in particular a total thickness, of at least 80 µm, preferably from 80 to 3000 µm.

It is preferable that the slab 1, 1a, 1b, 1c has a thickness of at least 80 µm to ensure mechanical strength and cohesion of the layers.

It is preferable that the slab 1, 1a, 1b, 1c has a thickness that is not greater than 3000 µm so as not to excessively stiffen the final product, which, for the assumed purposes, must have a certain flexibility.

Preferably, the plastic/wood weight ratio is about 3.5÷5/1 (i.e., from 3.5:1 to 5:1) or about 0.4÷1.1/1 (i.e., from 0.4:1 to 1.1:1).

In particular, preferably, in case the plastic is derived from corn starch, such as Mater-Bi, in particular in case the plastic comprises polybutylene adipate terephthalate (PBAT) and/or thermoplastic starch (TPS), the plastic/wood weight ratio is approximately 3.5÷5/1; and in case the plastic is PLA, the plastic/wood weight ratio is approximately 0.4÷1.1/1.

The proportion between wood and plastic is preferably determined as a function of the following variables: thickness of each wood sheet, number of wood sheets, wood species, type of bioplastic and any additives, intended use of the semi-finished product, and preferably also of the anatomical section affected by the cutting plane and any other eventual factors such as viscosity and/or working temperatures.

Preferably, the grain of any wood layer 2a, 2b, 2c is transverse, preferably orthogonal, with respect to the grain of the wood layer 2a, 2b, 2c subsequent thereto along the thickness of the multilayer slab 1, 1a, 1b, 1c.

Under general and standard conditions, to obtain maximum strength in different directions, the grain angle between successive sheets is orthogonal.

However, different configurations are possible.

In particular, the angle between the grain of successive wood sheets may decrease to 0° (parallel grain between successive wood sheets) if the design or functions of the slab (semi-finished product) and of the products derived from it require it.

One or more wood sheets may have a parallel or diagonal grain with respect to other layers.

The angle formed between the direction of the grain of the wood sheets can be selected according to the following variables: thickness of each wood sheet, wood species, desired characteristics of the slab (semi-finished product), radii of curvature of any inflection points of the surfaces.

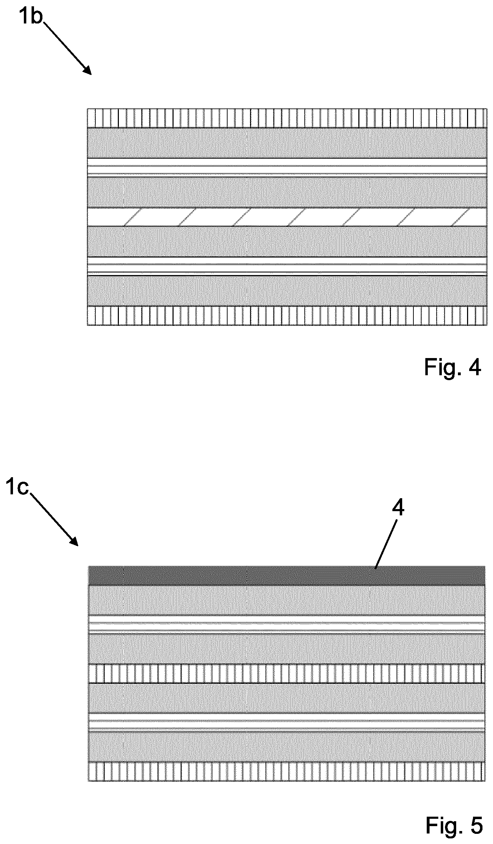

Optionally, the multilayer slab 1c (Figure 5) further comprises a layer of biodegradable cellulose 4, in particular biodegradable paper; in particular said layer of biodegradable cellulose 4 is an outer layer of the multilayer slab 1 (as in Figure 5) or said biodegradable cellulose layer is arranged between two plastic layers 3a, 3b and/or between two wood layers 2a, 2b, 2c, for example said biodegradable cellulose layer can be a central layer of the multilayer slab.

In case the biodegradable cellulose layer 4 is an outer layer, it may be for example adapted to give one side of the finished product a particular aesthetic characteristic, for example a specific color, or a particular technical characteristic, for example it may be technical paper suitable and certified for food contact.

In case said biodegradable cellulose layer is arranged between two plastic layers 3a, 3b and/or between two wood layers 2a, 2b, 2c, for example in case said biodegradable cellulose layer is a central layer of the multilayer slab, it can be suitable for providing strength and/or insulation, in particular thermal insulation.

Preferably, the multilayer slab 1, 1a, 1b, 1c comprises at least three wood layers 2a, 2b, 2c and at least two plastic layers 3a, 3b; in particular the wood layers 2a, 2b, 2c and the plastic layers 3a, 3b are alternated with each other so that each plastic layer 3a, 3b is arranged between two respective wood layers 2a, 2b, 2c.

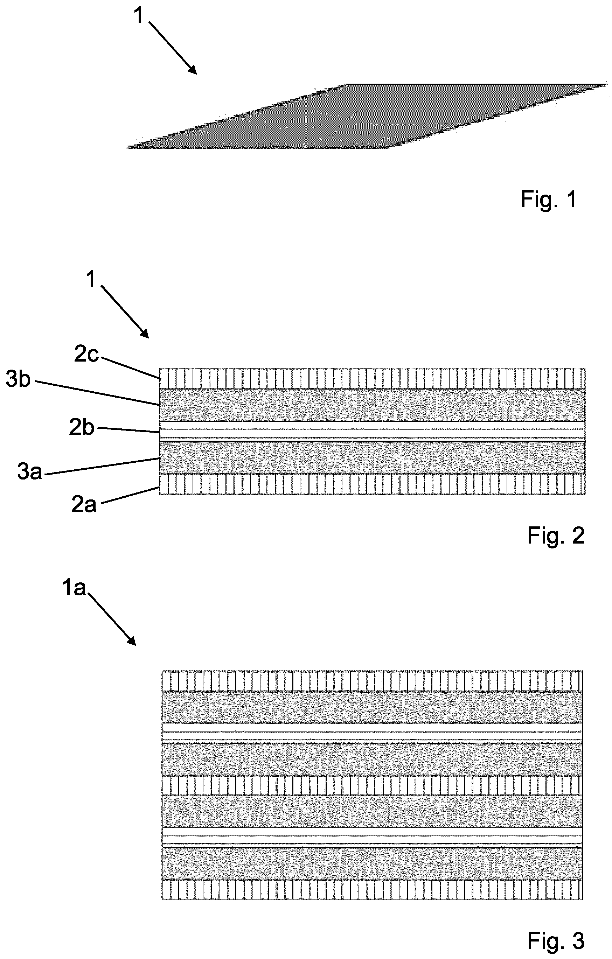

In the example of Figure 2, the multilayer slab 1 comprises at least three wood layers 2a, 2b, 2c and at least two plastic layers 3a, 3b; and the wood layers 2a, 2b, 2c and the plastic layers 3a, 3b are alternated with each other so that each plastic layer 3a, 3b is arranged between two respective wood layers 2a, 2b, 2c. In this example, the grain of any wood layer 2a, 2b, 2c is orthogonal with respect to the grain of the wood layer 2a, 2b, 2c subsequent thereto along the thickness of the multilayer slab 1.

In the example of Figure 3, the multilayer slab 1a comprises five wood layers and four plastic layers; and the wood layers and the plastic layers are alternated with each other so that each plastic layer is arranged between two respective wood layers. In this example, the grain of any wood layer is orthogonal with respect to the grain of the wood layer subsequent thereto along the thickness of the multilayer slab 1a.

The multilayer slab 1b shown in Figure 4 has the same characteristics as the multilayer slab 1a in Figure 3, with the exception that the central wood layer has a diagonal grain with respect to the other wood layers.

The multilayer slab 1c shown in Figure 5 has the same characteristics as the multilayer slab 1a in Figure 3, with the exception that a more external wood layer is replaced by a biodegradable cellulose layer 4, in particular biodegradable paper.

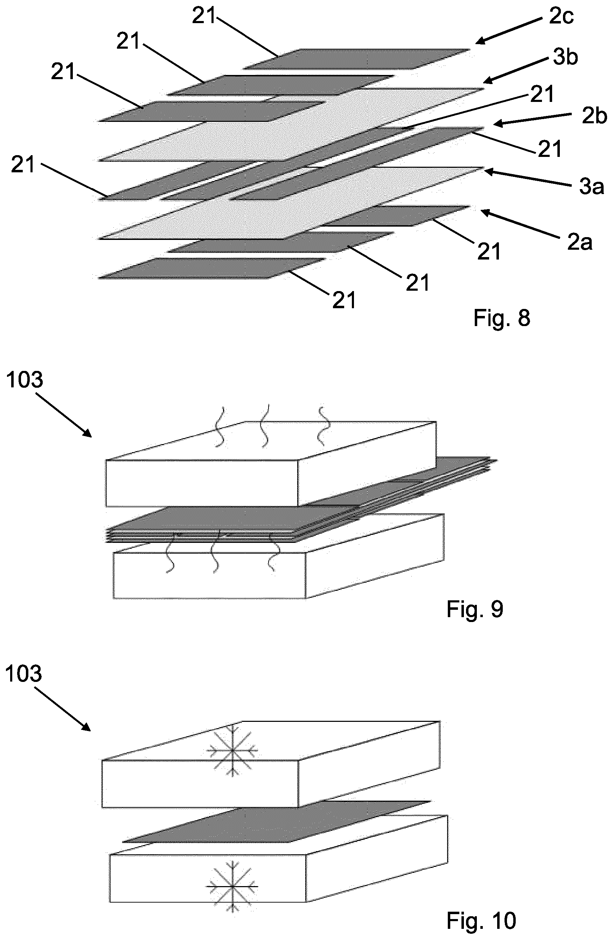

The invention also relates to a process for obtaining a multilayer slab 1, 1a, 1b, 1c, comprising the steps of:
a) making a sandwich structure (Figure 8) comprising at least one biodegradable and bio-based (i.e., biodegradable bioplastic) plastic layer (3a, 3b) arranged between two wood layers 2a, 2b, 2c, wherein each wood layer is formed by at least one wood sheet 21 and preferably wherein each plastic layer is formed by at least one plastic sheet, preferably only one plastic sheet;
b) pressing the sandwich structure by means of a press 103, in particular wherein the pressing is performed at a temperature greater than 100°C (hot pressing, Fig. 9), e.g., about 135°, and preferably the pressing is subsequently performed at a temperature less than or equal to 60 °C (cold pressing, Fig. 10).

It is particularly preferable that the hot pressing time is approximately 5 minutes at a temperature of approximately 135°C and that the subsequent cold pressing (<60°C) is performed for approximately 5 minutes. The pressure is preferably equal to about 10 kg/cm².

Preferably, to make the sandwich structure the following steps may be provided:
a1) arranging at least one wood sheet 21 on a flat support, preferably PTFE (Teflon) to make a wood layer;
a2) arranging at least one plastic sheet on the wood layer made in the previous step to make a plastic layer;
a3) arranging at least one wood sheet on the plastic layer made in the previous step to make another wood layer;
a4) optionally repeating steps a2) and a3) to make a sandwich structure having a predetermined number of wood layers and a predetermined number of plastic layers.

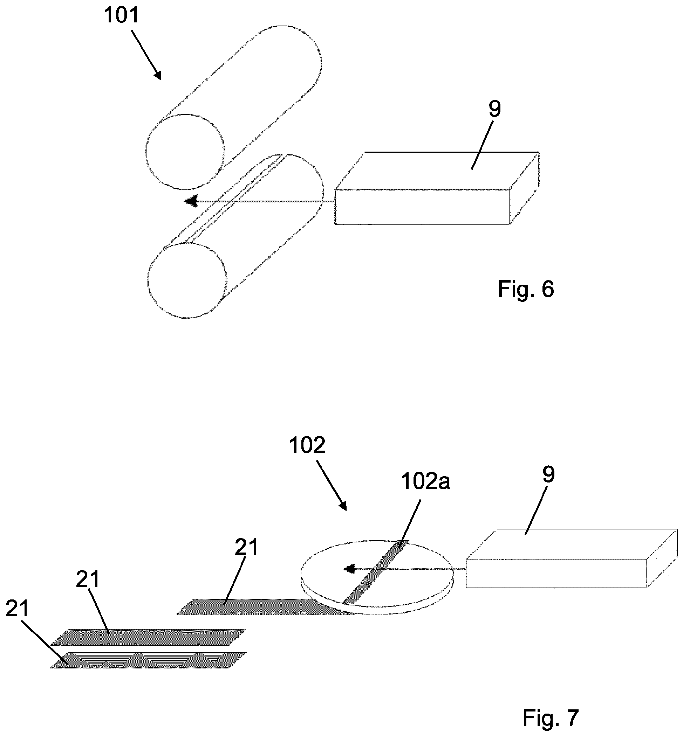

Preferably, the wood sheets 21 are obtained by performing at least the following steps:
- drying a wooden board 9;
- performing an edge jointing and thickness planing of the wooden board 9 (Fig. 6), in particular using a planer 101;
- performing a cutting operation on the wooden board 9 by means of a surface finishing planer 102 so as to obtain a wood sheet 21 (Fig. 7), in particular having a thickness from 30 to 900 µm, and repeating said cutting operation to obtain a plurality of wood sheets 21.

Preferably, after each predetermined number (preferably from 1 to 5) of said cutting operations, the surface of the wooden board 9 to be cut is hydrated, preferably by spraying water, in particular water at a temperature of 10 to 40°C.

Preferably, before performing the first cutting operation, the surface of the wooden board 9 to be cut is hydrated, preferably by spraying water, in particular water at a temperature of 10 to 40°C; or before performing the first cutting operation, the wooden board 9 is hydrated by means of an autoclave.

In more detail, for example, in case each wood layer is made up of wood sheets adjacent to one other, a first layer of wood sheets is placed on top of a Teflon sheet, for example having a thickness of about 3 mm and dimensions equal to the press plate. The various wood sheets are arranged next to one another, limiting as much as possible overlaps or empty spaces between one and the other, until the Teflon sheet is completely covered (and therefore the dimensions of the press plate are completely covered). The first plastic sheet is then placed on top of the first layer of wood sheets, which also completely covers the surface of the press plate. A second layer of wood sheets is then placed on top of the plastic sheet, with the grain orthogonal, oblique or parallel to the first layer of wood sheets. Care is taken in the arrangement of the second (and any subsequent) layers of wood sheets so that the separation lines between one wood sheet and another are not exactly superimposed on those of a previous layer, but are offset from it, preferably by at least 20 mm. Optionally, a second plastic layer is placed and the assembly of the sandwich structure is continued by alternating layers of wood sheets and plastic sheets, until the desired number of layers is reached; for example a minimum number of three wood layers (and two plastic), or a particularly preferable number of five wood layers, or another number of layers depending on the intended use and the technical characteristics desired for the finished product.

As already mentioned, a variant of the above process involves the addition of a biodegradable cellulose based layer either in place of a central wood layer (to provide strength and insulation) and/or in place of an outer layer (to give one side of the finished product a particular aesthetic characteristic, for example a specific color) or a particular technical characteristic (for example, technical paper suitable and certified for food contact).

Below are some exemplary and/or particularly preferred characteristics.

Preferably, the wooden boards 9 are brought to a regular geometry, with planar-parallel faces and orthogonal planes by surface planing to obtain the first contact plane and corresponding orthogonal plane and subsequent thickness planing for the remaining planar-parallel faces.

Preferably, as already mentioned, to optimize the cutting process and improve the quality of the multilayer slabs 1, 1a, 1b, 1c, the wooden boards 9 are subjected to hygrothermal pre-treatment.

Preferably, the pre-treatment process involves working at room temperature with the surfaces of the cold-hydrated boards: the wood is superficially and repeatedly hydrated after every 1-3 passes in the surface finishing planer 102 by spraying with water, to ensure superficial and localized wetting, without leading to substantial variations in the overall moisture content of the wooden boards.

With different species of softwood, it is alternatively possible to improve the quality of the semi-finished products (slabs) by treatment in an autoclave. The autoclave is preferably set with a steam temperature of 105°C and absolute pressure of 1300 hPa for a duration of 110 hours. Although rather long, this treatment does not require sprinkling with cold water during the process.

Preferably, the cutting process involves cutting a wooden board lengthwise using a fixed knife (Fig. 7). The wooden board is moved along its longitudinal axis on the horizontal surface of the surface finishing planer 102 by means of a rubberized feed belt. The knife 102a is mounted on a horizontal graduated disc which allows the angle of the knife 102a itself to be adjusted with respect to the direction of translation of the wooden board 9 (horizontal rotation of the knife 102a via graduated disc). The graduated disc also has a knife holder slide with a register system that allows both the position of the knife edge 102a with respect to the reference plane and the clearance angles to be defined.

The wooden board is pressed forward onto the knife, resulting in the formation of an ultra-thin wood sheet whose characteristics are determined by the experimentally defined cutting parameters. The process diagram is shown in Figure 7. There is at least one machine available on the market that meets the processing methods illustrated above, namely the "superfinishing" planer with the commercial name Marunaka Super Meca (MARUNAKA TEKKOSHO INC. 75-1 Marikoshinden, Suruga-Ku J421-0111 Shizuoka, Japan).

As regards the set-up of the planer 102, the following parameters were experimentally evaluated: type of knife, knife protrusion (thickness of the veneer), pressure of the rubberized feed belt, horizontal angle of the blade.

In experimental tests carried out, the cutting operations were performed with a knife with a width of 335 mm, a cutting angle of 35° and a thickness of 1.7 mm. There is at least one knife available on the market that meets the above-mentioned characteristics (Kanefusa BCH 335 mm type K, disposable).

With respect to the standard, after a long series of preliminary tests, the most effective set up of the knife holder slide was identified, corresponding to: 1 + 1/8 turns of the registers.

The thickness of the veneers which it produces is to be considered the maximum possible, responding to the requested quality requirements. With a different slide adjustment lower sheet thicknesses can be obtained.

To minimize slippage of the wooden board translation and thrust system, the process was implemented by bringing the pressure of the rubberized feed belt on the wooden board to the maximum register values corresponding to a pressure of 1 kg/cm².

For the same reason, the face of the wooden board opposite the working face has always been roughened by passing the surface over a suitable carpentry tool, maintaining the parallelism of the faces of the wooden boards.

Since the work was carried out with the surface of the wooden board moistened, different blade angles were tested for three different species, such as silver fir, red spruce and beech, by adjusting the adjustable blade holder disc at different angles with respect to the feed direction.

The following table shows the preferred combinations of the cutting angle.

| **Horizontal blade angle** | | | | | |
|---|---|---|---|---|---|
| **60°** | **40°** | **30°** | **20°** | **10°** | **0°** |
| softwood | cedarwood | poplar | silver fir | English oak | hardwood |
| fresh wood | pine | walnut | red spruce | rosewood | dry wood |

With reference to the wood sheets 21, for the reasons explained above, the roughness varies greatly depending on the type of wood (homocyclic or heterocyclic), the type of porosity - where relevant - (diffuse, annular, etc.), the wood species and the anatomical section of the cutting plane.

However, in all embodiments, the roughness parameters of the wood sheets 21 are preferably as follows: Sq 45 ÷ 65 µm; Sp 70 ÷ 95 µm; Sv 210 ÷ 260 µm; Sz 300 ÷ 340 µm; Sa 35 ÷ 50 µm.

It was previously described that at least one plastic layer can be made of Mater-Bi. Mater-Bi is the commercial name of various classes of bioplastics produced by Novamont, from corn starch. Mater-Bi, like other bioplastics, is biodegradable and biocompostable, through microorganisms, with transformation into water, carbon dioxide and methane.

Mater-Bi preferably comprises polybutylene adipate terephthalate (PBAT) and/or thermoplastic starch (TPS).

Typically, Mater-Bi is a material formed by a crystalline phase consisting of amylose and a complexing agent and an amorphous phase consisting of amylopectin. Amylose and amylopectin are the constituents of starch used as a raw material; various additives are instead added during the production process.

The different classes of Mater-Bi differ according to the following factors: ratio between amylopectin and amylose in the starting starch; chemical nature of the additives; chemical nature of the complexing agents; operating conditions maintained during the production process.

In a preferred example, Mater-Bi plastic sheets have the following characteristics: Thickness: about 90 µm; Melting point: 115-145°C; Density: about 1270 kg/m³.

It was previously described that at least one plastic layer can be made of PLA. Polylactic acid (PLA) or polylactate, is an aliphatic polyester consisting of lactic acid (2-hydroxypropionic acid) derived from plant sources, it has the molecular formula (C3H6O3)x, molecular mass (u) approximately 60,000 g/mol and CAS number 26100-51-6. It occurs in two enantiomeric forms (L-D): only from enantiopure monomers is it possible to obtain the crystalline polymer that melts at 180 °C. Currently, lactic acid is industrially obtained by fermentation of sugars and carbohydrates. Industrial fermentation occurs by virtue of bacteria of the Lactobacillus genus, which has high purity, or alternatively of the Bacillus coagulans species. The product is biodegradable following hydrolysis at temperatures greater than 60 °C and humidity greater than 20%.

PLA has biodegradation times that, depending on the environment in which it is placed, vary from 1 to 4 years.

In a preferred example, PLA plastic sheets have the following characteristics: Thickness: about 20 µm; Glass transition temperature Tg: 58 °C; Melting point: 140-180°C; Density: about 1240 kg/m³.

The minimum radius of curvature of a multilayer sheet according to the invention, obtained without encountering excessive operational difficulties and without encountering significant resistance problems in subsequent handling operations, is 5 mm.

The grammage of a plywood board increases as the wood and plastic layers increase. For example, a multilayer slab with two wood layers has an average grammage of 200 g/m², with three wood layers has an average grammage of 400 g/m², with four wood layers has an average grammage of 600 g/m², and with five wood layers has an average grammage of 700 g/m².

By way of example, a multilayer slab with two wood layers has an average thickness of 0.2 mm, with three wood layers it has an average thickness of 0.4 mm, with four wood layers it has an average thickness of 0.6 mm, and with five wood layers it has an average thickness of 0.7 mm.

The mechanical properties were evaluated with regard to the tensile strength parallel to the grain, in partial accordance with the UNI ISO 3345 standard. The tensile strength expressed in MPa (N/mm²) was calculated using the formula σ = Pmax / b h where Pmax = ultimate tensile strength, in N, with b = specimen width, in mm, and h = specimen height, in mm.

For a multilayer slab with three wood layers, the tensile strength varied between 29 and 66 MPa, for a multilayer slab with four wood layers, the tensile strength varied between 20 and 55 MPa, for a multilayer slab with six wood layers, the tensile strength varied between 24 and 26 MPa.

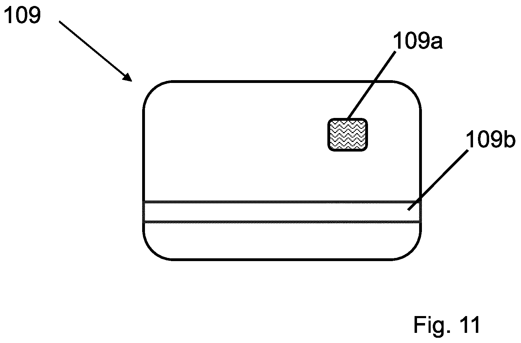

The invention also relates to a card 109 (Fig. 11) obtained from a multilayer slab 1, 1a, 1b, 1c. For example, one or more cards can be obtained by cutting a slab.

Preferably, the card 109 is provided with a microchip 109a and/or a magnetic strip 109b and/or an RFID tag, and/or an NFC tag.

Preferably, the card 109 is provided with at least one QR code and/or at least one barcode, or more generally with unique optical recognition means.

Preferably, said unique optical recognition means are applied by means of a printing system, a hot press, screen printing and/or laser engraving.

## Claims

1. A multilayer slab (1, 1a, 1b, 1c) comprising at least two wood layers (2a, 2b, 2c) and at least one plastic layer (3a, 3b),
wherein said at least one plastic layer (3a, 3b) secures, in particular adheres, the wood layers (2a, 2b, 2c) to one another;
and wherein said at least one plastic layer (3a, 3b) is made of a biodegradable and bio-based plastic; in particular wherein said plastic is bio-based according to ISO 16620-2:2019; in particular wherein said plastic is biodegradable according to EN 14995:2006.

2. A multilayer slab (1, 1a, 1b, 1c) according to claim 1, wherein the wood layers (2a, 2b, 2c) are secured to one another only via said biodegradable and bio-based plastic.

3. A multilayer slab (1, 1a, 1b, 1c) according to claim 1 or 2, wherein the wood layers (2a, 2b, 2c) which are subsequent to one another along the thickness of the multi-layer slab (1, 1a, 1b, 1c) are secured to one another by a single respective layer of said biodegradable and bio-based plastic.

4. A multilayer slab (1, 1a, 1b, 1c ) according to any one of the preceding claims, wherein said plastic with which each plastic layer (3a, 3b) is made, in particular each plastic sheet, comprises polybutylene adipate terephthalate (PBAT) and/or thermoplastic starch (TPS).

5. A multi-layer slab (1, 1a, 1b, 1c ) according to any one of the preceding claims, wherein the plastic/wood weight ratio is from 3.5:1 to 5:1; or from 0.4:1 to 1.1:1; preferably from 3.5:1 to 5:1.

6. A multilayer slab (1, 1a, 1b, 1c) according to any one of the preceding claims, wherein each wood layer (2a, 2b, 2c) has a thickness from 30 to 900 µm, preferably from 30 to 300 µm.

7. A multilayer slab (1, 1a, 1b, 1c) according to any one of the preceding claims, wherein each wood layer (2a, 2b, 2c) is formed by a wood sheet (21) or by a plurality of wood sheets (21) adjacent to one other on the same plane; and/or wherein each plastic layer (3a, 3b) is formed by a plastic sheet or by a plurality of plastic sheets adjacent to one another on the same plane, preferably wherein each plastic layer (3a, 3b) is formed by one plastic sheet; preferably wherein each wood sheet (21) has the following roughness parameters Sq from 45 to 65 µm; Sp from 70 to 95 µm; Sv from 210 to 260 µm; Sz from 300 to 340 µm; Sa from 35 to 50 µm.

8. A multilayer slab (1, 1a, 1b, 1c) according to any one of the preceding claims, wherein each plastic layer (3a, 3b) has a thickness from 20 to 90 µm.

9. A multilayer slab (1, 1a, 1b, 1c) according to any one of the preceding claims, wherein the plastic with each plastic layer (3a, 3b) is made of, in particular each plastic sheet, is PLA (polylactic acid) or a plastic obtained from organic or plant-based material; preferably obtained from corn starch, preferably wherein the plastic is Mater-Bi^{®}.

10. A multilayer slab (1, 1a, 1b, 1c) according to any one of the preceding claims, having a thickness of at least 80 µm, preferably from 80 to 3000 µm.

11. A multilayer slab (1c) according to any one of the preceding claims, further comprising a biodegradable cellulose layer (4), in particular biodegradable paper; in particular wherein said biodegradable cellulose layer (4) is an outer layer of the multilayer slab (1) or wherein said biodegradable cellulose layer (4) is arranged between two plastic layers (3a, 3b) and/or between two wood layers (2a, 2b, 2c).

12. A multilayer slab (1, 1a, 1b, 1c) comprising at least three wood layers (2a, 2b, 2c) and at least two plastic layers (3a, 3b); in particular wherein the wood layers (2a, 2b, 2c) and the plastic layers (3a, 3b) are alternated with each other so that each plastic layer (3a, 3b) is arranged between two respective wood layers (2a, 2b, 2c).

13. A process for obtaining a multilayer slab (1, 1a, 1b, 1c) according to any one of the preceding claims, comprising the steps of:
a) making a *sandwich* structure comprising at least one biodegradable and bio-based plastic layer (3a, 3b) arranged between two wood layers (2a, 2b, 2c), wherein each wood layer is formed by at least one wood sheet (21) and preferably wherein each plastic layer is formed by at least one plastic sheet;
b) pressing the sandwich structure by means of a press (103), in particular wherein the pressing is performed at a temperature greater than 100°C, and preferably thereafter the pressing is performed at a temperature less than or equal to 60°C; preferably wherein, to make the sandwich structure, the following steps are provided:
a1) arranging at least one wood sheet on a flat support to make a wood layer;
a2) arranging at least one plastic sheet on the wood layer made in the previous step to make a plastic layer;
a3) arranging at least one wood sheet on the plastic layer made in the previous step to make another wood layer;
a4) optionally repeating steps a2) and a3) to make a sandwich structure having a predetermined number of wood layers and a predetermined number of plastic layers.

14. A process according to claim 13, wherein the wood sheets (21) are obtained by performing at least the following steps:
- drying a wooden board (9);
- performing an edge jointing and thickness planing of the wooden board (9);
- performing a cutting operation on the wooden board (9) by means of a surface finishing planer (102) so as to obtain a wood sheet (21), in particular having a thickness from 30 to 900 µm, and repeating said cutting operation to obtain a plurality of wood sheets (21); preferably wherein after every predetermined number of said cutting operations, the surface of said wooden board (9) to be cut is hydrated, preferably by spraying water, in particular water at a temperature of 10 to 40°C; and/or wherein before performing the first cutting operation, the surface of the wooden board (9) to be cut is hydrated, preferably by spraying water, in particular water at a temperature of 10 to 40°C, or wherein before performing the first cutting operation, the wooden board (9) is hydrated by means of an autoclave.

15. A card (109) obtained from a multilayer slab (1, 1a, 1b, 1c) according to any one of claims 1 to 12; preferably wherein the card (109b) is provided with a microchip (109a) and/or a magnetic strip (109b) and/or an RFID tag, and/or an NFC tag.
